Europäisches Patentamt

European Patent Office  (11) Numéro de publication: **0 184 958**

Office européen des brevets  **A1**

(12) **DEMANDE DE BREVET EUROPEEN**

(21) Numéro de dépôt: **85402278.7**

(22) Date de dépôt: **22.11.85**

(51) Int. Cl.⁴: **D 04 H 1/00,** D 21 J 7/00, B 29 C 67/12

(30) Priorité: **28.11.84 FR 8418127**

(43) Date de publication de la demande: **18.06.86 Bulletin 86/25**

(84) Etats contractants désignés: **AT BE DE GB IT LU NL SE**

(71) Demandeur: **LAFARGE REFRACTAIRES Société Anonyme, 99, Avenue Aristide-Briand P.O. Box 560, F-92542 MontrougeCedex (FR)**

(72) Inventeur: **Brachet, Pierre, 19 avenue de la Marge, F-78000 Versailles (FR)**
Inventeur: **Roulon, Pierre, 27 boulevard de la République, F-69410 Champagne en Mont d'Or (FR)**

(74) Mandataire: **Phélip, Bruno et al, c/o Cabinet Harlé & Phélip 21, rue de la Rochefoucauld, F-75009 Paris (FR)**

(54) Procédé et dispositif pour l'obtention d'une pièce d'isolation thermique pour objet cylindrique et pièce obtenue par le procédé.

㉗ Procédé et dispositif pour l'obtention d'une pièce d'isolation thermique pour objet cylindrique et pièce obtenue par le procédé.

La pièce est en forme d'anneau brisé, elle est obtenue par dépôt de fibres dans un moule (20) de forme annulaire, avec une aspiration qui de préférence est pratiquée sur une face (29) perpendiculaire à l'axe. La coupure de l'anneau brisé est de préférence obtenue en prévoyant dans le moule une cloison formée d'une plaque (30) perpendiculaire à la surface d'aspiration.

" Procédé et dispositif pour l'obtention d'une pièce d'isolation thermique pour objet cylindrique et pièce obtenue par le procédé "

La présente invention est relative à un procédé d'obtention d'une pièce d'isolation thermique pour objet cylindrique tel qu'un tube et à la pièce ainsi obtenue.

Il est fréquemment nécessaire d'isoler thermiquement un tube pour le protéger soit contre un refroidissement exagéré soit contre un échauffement exagéré.

Il est connu d'utiliser dans ce but des pièces, ou coquilles, formées d'un demi-cylindre en matière d'isolation qu'on place de part et d'autre de la pièce à protéger et qu'on assemble ensuite par des moyens appropriés. Les coquilles sont en général obtenues par moulage. Cette manière de faire convient bien au cas, par exemple d'un tube véhiculant un fluide chaud et qui traverse une zone à température modérée, car les moyens d'assemblage peuvent être mis à l'extérieur et ne sont soumis qu'à des contraintes thermiques faibles. Au contraire, s'il s'agit, par exemple, d'un objet cylindrique qui traverse un four à très haute température et doit être protégé contre la chaleur, on conçoit que ces moyens d'assemblage seront soumis à des contraintes thermiques rigoureuses car il est difficile de les protéger efficacement. On pourrait, entre autre, prévoir des moyens d'accrochage des coquilles par l'intérieur sur l'objet cylindrique lui-même, mais cela entraînerait des complications appréciables.

Dans le cas où la matière d'isolation présente une certaine souplesse, comme c'est le cas des matières formées d'un enchevêtrement de fibres agglomérées, avec ou sans liant, on peut donner aux pièces d'isolation la forme d'anneaux brisés, c'est-à-dire la forme d'un tore, à section carrée ou rectangulaire, interrompu dans un seul plan passant à peu près par l'axe du tore. Par torsion de l'anneau brisé dans un plan parallèle à l'axe du tore, on peut en écarter suffisamment les deux côtés de la coupure pour qu'on puisse l'enfiler sur la pièce cylindrique, après quoi l'anneau brisé peut reprendre sa forme par élasticité et/ou sous l'effet d'une contrainte de sens inverse. On évite ainsi la nécessité d'organes de maintien distincts de la pièce d'isolation.

Usuellement, de telles pièces en forme d'anneau brisé sont obtenues par découpage d'une nappe plane de fibres enchevêtrées. Ce mode d'obtention simple à l'inconvénient d' une perte de matière assez importante.

On sait, il est vrai, obtenir des pièces en forme de parallélépipède en fibres agglomérées par moulage : pour cela on prévoit un moule à la forme de la pièce à obtenir, et dont une paroi est perforée et on introduit dans le moule, du côté opposé à la paroi perforée, des fibres en suspension dans un fluide, de préférence de l'eau, pendant qu'on établit une dépression du côté de la paroi perforée, afin d'aspirer le fluide à travers cette paroi. Les fibres sont retenues contre cette paroi et s'y accumulent pour former la pièce désirée. Une telle technique n'a pas, à la connaissance des inventeurs, été utilisée ou suggérée pour faire des pièces en forme d'anneau brisé.

L'invention fournit donc un procédé d'obtention d'une pièce d'isolation thermique pour objet cylindrique, cette pièce ayant la forme d'un anneau brisé et étant constituée de fibres agglomérées qui présente pour particularités que la pièce est obtenue par dépôt de fibres dans un moule de forme torique à section rectangulaire, ce moule étant soumis à une aspiration sur une de ses faces et la coupure de l'anneau étant obtenue lors du moulage grâce à une cloison perpendiculaire à la face d'aspiration.

La face sur laquelle est faite l'aspiration n'est pas indifférente. Il paraît logique pour des raisons de symétrie de prévoir une des faces cylindriques du moule, et de préférence la face interne, car on obtient ainsi une bonne précision dimensionnelle du côté qui fait face à la pièce cylindrique qu'il s'agit de protéger. L'expérience a montré toutefois que cette manière d'opérer présente des inconvénients. En effet, les fibres ainsi aspirées ont tendance à se disposer en anneaux ou couche concentrique, ce qui entraîne, en service, un risque de feuilletage avec dégradation de l'isolation à partir de l'extérieur par un phénomène analogue à un pelage.

Selon une modalité préférée de l'invention, la face du moule qui est soumise à l'aspiration est perpendiculaire à l'axe du dispositif.

On obtient ainsi une pièce qui présente pour particularités que les fibres sont principalement orientées suivant des plans perpendiculaires à l'axe du dispositif.

L'invention va maintenant être décrite plus en détail à l'aide d'un exemple pratique illustré aux dessins parmi lesquels :

- fig. 1 est une vue en perspective d'une pièce d'isolation selon le procédé de l'invention;

- fig. 2 est une vue partielle d'une variante de la fig. 1;

- fig. 3 est une vue partielle d'une autre variante de la fig. 1;

- fig. 4 est une perspective du moule pour la mise en oeuvre de ce procédé, coupé selon un plan axial.

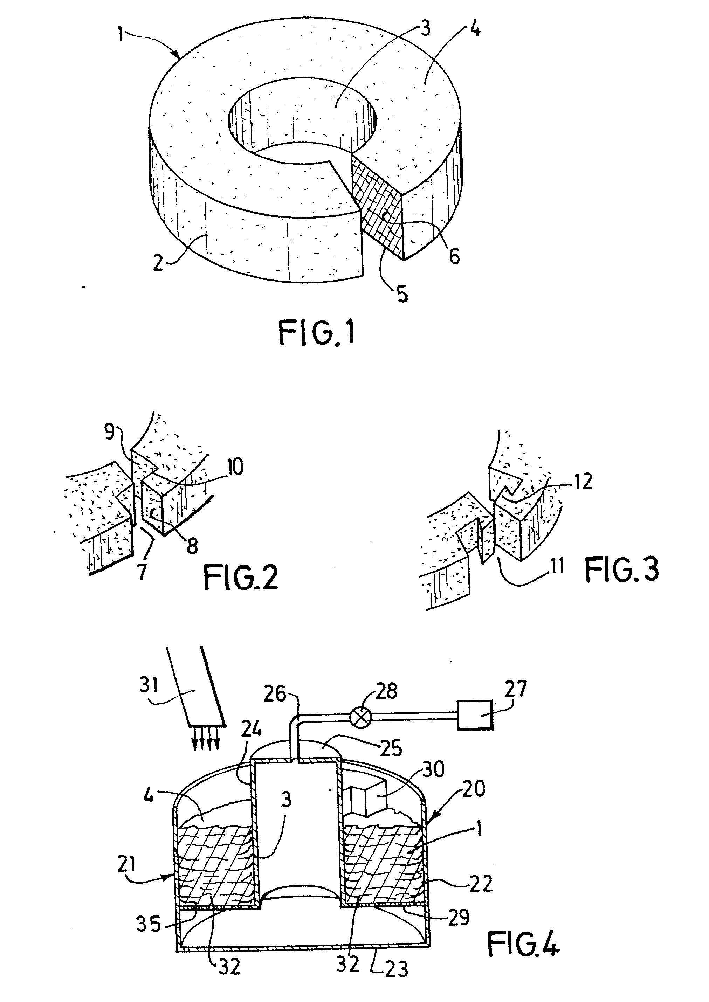

La figure 1 montre une pièce d'isolation 1 en forme de tore, à section carrée avec une surface extérieure 2 et une surface intérieure 3, ses surfaces étant cylindriques et coaxiales, une première face plane 4 et une seconde face plane 5, ces deux faces étant perpendiculaires à l'axe des surfaces extérieure et intérieure. Le tore présente une interruption 6, limitée par deux plans axiaux. Sur la figure, l'interruption 6 est représentée légèrement ouverte, mais il doit être entendu qu'en usage, les deux côtés de l'interruption sont en contact l'un avec l'autre.

L'interruption peut être définie par des surfaces conjuguées différentes de plans axiaux. La figure 2 montre une coupure 7 dont chaque côté est défini par deux plans axiaux 8-9, distincts reliés par une partie cylindrique coaxiale 10. Une telle disposition réduit les pertes thermiques et les passages de gaz par la coupure, car elle constitue un passage en chicane.

La figure 3 montre une coupure de forme plus compliquée 11, dont chaque côté comporte, en vue axiale, une structure de crochet 12. La coopération des deux côtés conduit à un verrouillage qui empêche la séparation des deux côtés de la pièce 1.

La figure 4 montre la structure d'un moule 20 destiné à l'obtention d'une pièce telle que 1. Un coffrage extérieur 21 comprend une paroi cylindrique 22 et un fond étanche 23. Un coffrage intérieur 24 est constitué d'un tube cylindrique coaxial à la paroi 22. Ce coffrage intérieur est ouvert à sa partie inférieure, qui n'atteint pas le fond 23, et il est fermé à sa partie supérieure par un couvercle 25 percé d'un trou pour le passage d'un tube 26 qui est relié, par l'intermédiaire d'une vanne de réglage 28, à une source de vide 27. Les deux coffrages 21, 24 sont reliés à leur partie inférieure par une plaque de tôle perforée (ou un tamis) 29. Une plaque non perforée 30, perpendiculaire à la tôle perforée 29, s'étend entre les coffrages extérieur et intérieur d'une part, entre la tôle perforée 29 et le plan de l'extrémité ouverte du coffrage extérieur 21. Cette plaque peut être plane ou avoir une forme comportant des arêtes perpendiculaires à la tôle perforée 29. La forme de cette plaque 30 correspond à la forme de la coupure telle que 6, 7, 11 qu'on désire obtenir sur la pièce terminée.

La figure 4 montre une pièce 1 dans le moule 20, cette pièce étant à peu près terminée.

Pour la confection de cette pièce, on établit une dépression dans l'espace situé entre le fond 23 et la tôle perforée 29, à l'aide de la source de vide puis on déverse des fibres dans l'espace entre les deux coffrages 21, 24 à l'aide d'un dispositif de déversement 31. Sous l'effet de l'aspiration, les fibres 32 viennent se déposer parallèlement à la tôle perforée 29. Eventuellement, on augmente la dépression à mesure que le moule se remplit, à l'aide de la vanne 28. On observe que la face 4 de la pièce 1 qui est à l'opposé de la tôle perforée 29 n'est pas rigoureusement plane. Cela n'a pas d'importance, car lors de la mise en place d'une série de pièces 1 sur un objet cylindrique qu'on désire protéger, les pièces successives sont pressées l'une contre l'autre, la face 4 venant en contact avec une face similaire 4 ou 5 de l'élément adjacent, ce qui assure une étanchéité convenable dans tous les cas.

On observe aussi que la plaque 30 permet d'obtenir la coupure 6, 7, 11 sans aucune opération supplémentaire, et sans perturbation appréciable de la disposition des fibres. Cela ne serait évidemment pas le cas si cette coupure était obtenue par un découpage ultérieur. Si l'aspiration était faite par une des surfaces cylindriques extérieure ou intérieure du moule, il ne serait pas possible, une coupure ayant une forme autre que celle d'un plan axial.

En revanche les tolérances de la surface intérieure 3 de la pièce obtenue selon le procédé sont excellentes, ce qui permet d'améliorer la fixation de la pièce sur l'objet cylindrique à l'aide d'un adhésif ou un ciment.

0184958

<u>REVENDICATIONS</u>

1. Dispositif pour la fabrication d'une pièce d'isolation thermique pour objet cylindrique, cette pièce présentant la forme d'un anneau brisé et étant constituée de fibres agglomérées, caractérisé en ce qu'il comprend un moule formé de deux parois cylindriques coaxiales (22, 24) et une paroi perforée (29) disposée perpendiculairement à ces parois, des moyens étant prévus pour appliquer une dépression sur une face de cette paroi perforée pendant que l'on charge des fibres sur la face opposée, et en ce qu'est prévue une plaque, présentant une forme correspondant à celle de la coupure désirée de l'anneau brisé, et qui relie les deux parois cylindriques et la plaque perforée du côté où l'on charge les fibres.

2. Dispositif selon la revendication 1, caractérisé en ce que la face du moule qui est soumise à l'aspiration est perpendiculaire à l'axe du dispositif.

3. Dispositif selon l'une quelconque des revendications 1 et 2, caractérisé en ce que la paroi perforée est une tôle perforée ou un tamis.

4. Pièce d'isolation obtenue au moyen du dispositif de l'une quelconque des revendications 1 à 3, caractérisée en ce que les fibres sont principalement orientées suivant des plans perpendiculaires à l'axe du dispositif.

1/1

FIG.1

FIG.2

FIG.3

FIG.4

## Office européen des brevets

## RAPPORT DE RECHERCHE EUROPEENNE

0184958
Numero de la demande

EP 85 40 2278

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 341 890 (W.J. OJA)<br>* Figures 1,2,2a,3,4,6; colonne 4, lignes 56-64 et colonne 5, lignes 12-23 * | 1-4 | D 04 H 1/00<br>D 21 J 7/00<br>B 29 C 67/12 |
| | --- | | |
| Y | US-A-2 571 334 (W.H. BROWNE)<br>* Colonne 1, lignes 1-6; colonne 6, lignes 24-28 et 71-73; figures 7,8; colonne 7, lignes 15-22 * | 1-4 | |
| | --- | | |
| A | US-A-3 583 030 (R.D. TERRY et al.)<br>* Figure 7 * | | |
| | ----- | | |

|  |  |
|---|---|
|  | DOMAINES TECHNIQUES RECHERCHES (Int. Cl.4)<br><br>D 04 H 1/00<br>B 29 C<br>D 21 J 7/00<br>F 16 L 59/00 |

Le présent rapport de recherche a été établi pour toutes les revendications

| Lieu de la recherche | Date d'achèvement de la recherche | Examinateur |
|---|---|---|
| LA HAYE | 04-03-1986 | DAELEMAN P.C.A. |